# EUROPÄISCHE PATENTANMELDUNG

(11) **EP 4 606 949 A1**
(43) Veröffentlichungstag der Anmeldung: **27.08.2025**
(21) Anmeldenummer: 25180678.2
(22) Anmeldetag: 14.11.2018
(51) Int. Cl.: D21B 1/32, D21B 1/34, B07B 1/24, B03B 9/06, B03B 5/36, B07B 1/18

(54) **VERFAHREN ZUR NASSAUFBEREITUNG VON MATERIAL, SIEBTROMMEL, KNETER UND ANORDNUNG VON MEHREREN ZYKLONEN**

(30) Priorität: 22.11.2017 DE 102017010802; 02.05.2018 DE 102018003522
(62) Teilanmeldung aus: 18833151.6
(71) Anmelder: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus

(57) **Zusammenfassung**

Die Erfindung betrifft ein Verfahren zur Nassaufbereitung von Material mit einer Mühle, die auch als Kneter ausgebildet sein kann, und einem nachgeschalteten Klassierer. Dieser Klassierer kann auch außerhalb der Mühle angeordnet sein. Außerdem werden verschiedene Verfahrensvarianten und Vorrichtungen beschrieben.

## Beschreibung

Die Erfindung betrifft ein Verfahren zur Nassaufbereitung von Material, eine Siebtrommel, einen Kneter und eine Anordnung von mehreren Zyklonen.

Eine Mühle und insbesondere auch ein Kneter eignen sich dazu, Materialen mit einem Reststoffgehalt von über 20 % zu kneten oder zu mahlen, um einzelne Fraktionen des Materials freizulegen. Diese Fraktionen können in einem nachgeschalteten Klassierer voneinander getrennt werden. Dieser Klassierer ist üblicherweise ein in der Mühle angeordnetes Siebblech, durch das nur eine Materialfraktion mit einem bestimmten Durchmesser passieren kann.

Der Erfindung liegt die Aufgabe zu Grunde, ein derartiges Verfahren weiterzubilden. Diese Aufgabe wird mit einem gattungsgemäßen Verfahren gelöst, bei dem die Mühle ohne Trennorgan als reines Mahl- oder Knetorgan ausgebildet ist und der Klassierer außerhalb der Mühle angeordnet ist.

Dies ermöglicht es die Mühle auch ohne Trennorgan als reines Mahl- oder Knetorgan zu verwenden und aus der Mühle entnommenes Material in einem nachgeschalteten Klassierer weiter zu behandeln. Während in der Mühle in der Regel nur nach Partikeldurchmesser getrennt wird, erlaubt ein nachgeschalteter Klassierer auch eine Trennung beispielsweise in einer Siebtrommel.

Alternativ oder kumulativ wird vorgeschlagen, dass der Klassierer ein Endlosband wie insbesondere ein Riemen oder ein Gliederband aufweist. Eine derartige Vorrichtung ist in der EP 1 275 770 B1 beschrieben, auf die vollinhaltlich Bezug genommen wird.

Eine Trennung von Material in einer Flüssigkeit kann auch mit einem Klassierer erreicht werden, der eine Fächerdüse aufweist. Eine Fächerdüse erlaubt es, durch die Auffächerung des Flüssigkeitsstroms Materialien in der Flüssigkeit zu trennen.

Je nach verwendetem Verfahren kann das Material mit mehr oder weniger Flüssigkeitsanteil klassiert werden. Das Material kann den Klassierer mit einem Trockengehalt von mehr als 15 %, vorzugsweise mehr als 20 % und besonders bevorzugt sogar mehr als 30 % verlassen. Der Überlauf der Sortierung hat somit eine relativ hohe Stoffdichte mit relativ hohem Trockengehalt. Das dem Klassierer entnommene Material kann somit auch einem Kneter zugeführt werden, der dann bei Trockengehalten von etwa 30 % und mehr arbeitet, um im Falle von Abzug von Wasser aus dem Kneter als Eindicker wirken zu können. Durch den hohen Trockengehalt im Kneter entstehen sehr hohe Scherkräfte, die das Material mahlen und dabei unterschiedliche Materialien trennen. Je nach verwendetem Material ist eine extrem hohe Zerfaserungsleistung möglich.

Außerdem ermöglicht die vorgeschlagene Verfahrensführung einen Suspendierer und/oder einen Zyklon mit sehr hohem Wassergehalt zu fahren, um in den Leitungen bei hohen Strömungsgeschwindigkeiten von beispielsweise drei bis vier Meter pro Sekunde Verstopfungen zu vermeiden und im Kneter mit hohem Trockengehalt zu arbeiten.

Wenn der Kreislauf aus Mühle und Klassierer mehrmals durchlaufen wird, dient die Mühle jeweils dazu, das Material zu mahlen, um dadurch die anschließende Trennung im Klassierer zu erleichtern.

Vorteilhaft ist es, wenn das Material zwischen Klassierer und Mühle einen Zyklon durchläuft. Ein Zyklon erlaubt es bei hohem Wassergehalt neben dem Klassierer noch eine weitere Trennung vorzunehmen. Dabei können auch mehrere Zyklonen hintereinander oder parallel geschaltet werden.

Als Klassierer können unterschiedliche Siebtrommeln verwendet werden, die in der Regel eine drehbare Trommel und einen in einem radial inneren Bereich der Trommel angeordneten Materialzulauf aufweisen.

Ein derartige derartige Anordnung ist in der US 5,019,248 A gezeigt. Diese Vorrichtung dient aber nicht dem Klassifizieren sondern dem zerschlagen von Stroh bei der Zerkleinerung von Strohballen.

Erfindungsgemäß wird daher eine Siebtrommel mit den Merkmalen des Anspruchs 7 vorgeschlagen.

Dies führt dazu, dass das Material mit einer Geschwindigkeit aus dem Materialzulauf austreten kann, die so hoch ist, dass es an das Prallblech anschlägt und von dort abprallt oder zunächst daran entlang geleitet wird bis es sich am Rand des Prallblechs vom Blech löst. Dies führt dazu, dass unterschiedliches Material mit unterschiedlichem Impuls abprallt oder sich vom Blech löst und dadurch an unterschiedlichen Stellen in der Trommel aufgefangen werden kann.

Um an einer Kante des Prallblechs am Flüssigkeitsabriss eine Materialtrennung zu erzielen ist es vorteilhaft, wenn das Prallblech einen konkaven und einen konvexen Bereich aufweist. Diese Bereiche sind vorzugsweise konzentrisch zueinander angeordnet.

Besonders vorteilhaft ist es, wenn das Prallblech eine gegenläufig gebogene Oberfläche aufweist. Hierbei kann das Prallblech beispielsweise einen konkaven Bereich aufweisen, auf den der Materialzulauf ausgerichtet ist und konzentrisch dazu einen konvexen Bereich. Alternativ dazu kann das Prallblech auch einen konvexen Bereich aufweisen, auf den der Materialzulauf ausgerichtet ist und konzentrisch dazu einen konkaven Bereich. Dies führt jeweils dazu, dass das auf das Prallblech gelangte Material nicht vom Prallblech wieder sofort abprallt, sondern am Prallblech entlang gleitet und sich erst am Rand des Prallblechs vom Prallblech löst.

Das Prallblech kann innerhalb der Trommel statisch angeordnet sein und es kann sich auch mit der Trommel drehen. Vorzugsweise wird das Prallblech konzentrisch zur Trommel angeordnet.

Eine besondere Ausführungsvariante sieht vor, dass der Materialzulauf auf einen dezentralen Bereich des Prallblechs ausgerichtet ist. Dies ermöglicht es, die Flüssigkeit möglich lange entlang des Prallblechs zu führen.

Eine besonders bevorzugte Art der Flüssigkeitsführung wird erreicht, wenn das Prallblech eine mittlere Ebene aufweist und die Ausrichtung des Materialzulaufs in einem stumpfen Winkel zur mittleren Ebene angeordnet ist, sodass die Strömungsrichtung des Material an dem Prallblech in einem stumpfen Winkel abgelenkt wird.

Die Prallplatte ist dadurch derart relativ zur Ausrichtung des Materialzulaufs geschwenkt, dass das Auseinanderreißen der Suspension zu Tropfen in einer Weise erfolgt, die es ermöglicht, selbst bei hohen Fluggeschwindigkeiten den Tropfenschwall so zu lenken, dass er in einem bestimmten Umfangsbereich der Prallplatte sich von der Prallplatte löst. Dadurch können sich die verschiedenen Begleitstoffe an unterschiedlichen Stellen im Bereich der Trommel sammeln und aus der Trommel nach außen abgeführt werden.

Eine vorteilhafte Ausgestaltung der Siebtrommel sieht vor, dass sie mehrere Prallbleche aufweist, auf die jeweils ein Materialzulauf ausgerichtet ist. Somit können die Prallbleche gleichzeitig parallel genutzt werden, um an jedem der Prallbleche nur einen Teilstrom des Materialzulaufs zu trennen.

Dabei ist es vorteilhaft, wenn die Prallbleche nicht nebeneinander sondern hintereinander in der Trommel angeordnet sind.

Ein Verfahren zur Klassifizierung von Material ist Gegenstand des Anspruchs 14.

Für das erfindungsgemäße Verfahren eignet sich ein spezieller Kneter mit einem oberen Zulauf, der einen waagerechten Ringkanal aufweist, der sich um den Zulauf erstreckt, um am Zulauf aus dem Kneter überlaufende Flüssigkeit aufzunehmen. Dies ermöglicht eine neue Art der Schwimmtrennung, bei der mit der überlaufenden Flüssigkeit aufschwimmende Partikel mitgerissen werden, während nicht schwimmende schwerere Partikel im Zentrum des waagerechten Ringkanals absinken, um im unteren Bereich des Kneters mechanisch bewegt zu werden.

Vorteilhaft ist es, wenn die durch den Kneter hindurchfließende Flüssigkeit im oberen Bereich einen Wirbel erzeugt, in den mittig das Material über den Zulauf zugeführt wird. Das Umwälzen im Kneter sorgt einerseits für den Strudel und andererseits dafür, dass die leichteren Partikel nach oben aufsteigen, wo sie an der Oberfläche der Flüssigkeit in den waagerechten Ringkanal geraten, über den die leichten Stoffe einem Ablauf zugeführt werden.

Daher ist es vorteilhaft, wen der Zulauf konzentrisch zum waagerechten Ringkanal angeordnet ist.

Vorteilhaft ist auch eine Anordnung von mehreren Zyklonen bei der mehrere verschieden große Zyklonen mit der gleichen Zuführleitung und mit der gleichen Abführleitung verbunden sind. Dies ermöglicht es, die Zyklone parallel zu schalten. Dabei ist es besonders vorteilhaft, wenn sich die Größe der Zyklone in Richtung der Strömung in der Zuführleitung verkleinert.

Für das Abziehen der Partikel aus dem Zyklon an einer zentralen Öffnung kann eine zentrale Öffnung an der Oberseite des Zyklons vorgesehen werden. Dies führt dazu, dass auch leicht zu Verstopfungen neigende Materialien leicht aus dem Zyklon abgeführt werden können. Sowie zur Verstopfung neigende Partikel abgeführt sind, können auch Zyklone verwendet werden, die an ihrer Oberseite ein Tauchrohr aufweisen, mit dem das Material aus dem Zyklon zentral entnommen wird.

Mehrere Ausführungsbeispiele sind in der Zeichnung dargestellt und werden im Folgenden näher beschrieben. Es zeigen
- Figur 1: einen schematischen Aufbau einer erfindungsgemäßen Anlage,
- Figur 2: schematisch einen Querschnitt durch einen Kneter,
- Figur 3: schematisch den Zulauf eines Kneters,
- Figur 4: schematisch einen Kneter mit mittlerem Zulauf,
- Figur 5: schematisch eine Seitenansicht eines angeströmten Prallblechs,
- Figur 6: schematisch das Auftreffen eines Strahls auf ein Siebblech eines Klassierers,
- Figur 7: schematisch eine Draufsicht auf parallel geschaltete Zyklone mit unterschiedlichem Durchmesser,
- Figur 8: eine Seitenansicht des größten Zyklons aus Figur 7 und
- Figur 9: eine Seitenansicht des kleinsten Zyklons aus Figur 7.

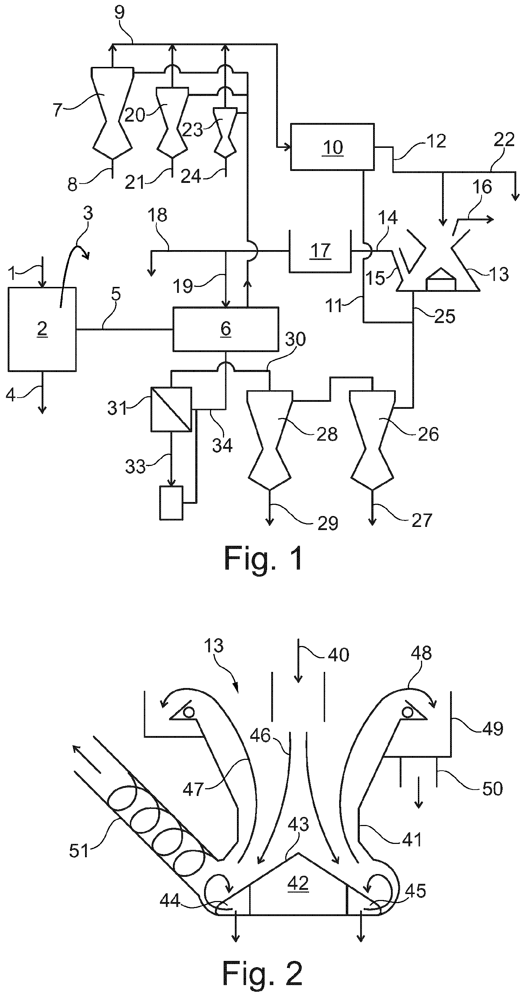

Die Figur 1 zeigt die Kombination einer traditionellen Altpapierstoffaufbereitung mit einem neuen Nass-Mühlen-Klassier-System. Dies ermöglicht dem Papiermacher, wesentlich mehr störende Begleitstoffe aus dem Prozess auszuschleusen als bisher. Außerdem muss er erheblich weniger Verluste hinnehmen.

Das Altpapier 1 wird in einen Pulper 2 gegeben, in dem beispielsweise mit einer Zopfwinde (nicht gezeigt) Drähte 3 ausgeschleust werden. Anstelle von Altpapier 1 können auch andere faserhaltige oder feinstoffhaltige Rohstoffe in den Pulper 2 gegebenen werden. Dort wird bereits der größte Teil der leicht zerfaserbaren Stoffe 4 aus dem System ausgetragen.

Die schwer zerfaserbaren Stoffe 5 gelangen als Rejektstrom zu einer Aufgabe 6, die beispielsweise ein Suspendierer sein kann. Dort werden die schwer zerfaserbaren Stoffe stark verdünnt und zunächst dem größten Zyklon 7 zugeführt, in dem die Schwerstoffe 8, wie insbesondere Metalle, abgeschieden bzw. als Produkt gewonnen werden. Aus dem Zyklon 7 gelangt die Suspension 9 zu einem Klassierer 10, der beispielsweise als Trommelklassierer (71) ausgebildet sein kann. Dort werden die freien Fasern als Feinstoffe 11 abgeschieden oder als Produkt gewonnen. Die gröberen Stoffe 12 gelangen in den Kneter 13. Dieser Kneter 13, der auch die Funktion einer Mühle hat, zerfasert selbst extrem schwer zerfaserbare Materialien. Dabei werden insbesondere spröde Materialien, wie z. B. harte Kunststoffe und Holz, zerkleinert, um das Material anschließend im Zyklon weiter zu behandeln. Im Kneter 13 werden jedoch auch Freifasern 14 freigelegt und mittels einer Schnecke 15 aus dem Kneter entnommen. Dadurch wird eine Wirkungsverminderung durch den Kappaeffekt vermieden und eine unnötige Faserschädigung minimiert. Verfahrenstechnisch ist darauf zu achten, dass die Fasern und Begleitstoffe rasch abgeführt werden, um die Stoffzufuhr und somit die Produktion zu maximieren. Im Kneter können auch aufgeschäumte Materialien 16 abgeschieden werden.

Die Begleitstoffe 14 werden vom Kneter 13 in einen Puffer 17 gegeben, wo sie nach dem First-in/First-out-Prinzip zwischengespeichert werden.

Von hier werden hoch angereicherte, das heißt von Freifasern und/oder Feinstoffen abgereicherte Begleitstoffe 18 ausgeschleust. Sofern die Begleitstoffe noch zurückgewinnbare Fasern oder Feinstoffe aufweisen, werden sie als Stoffstrom 19 der Aufgabe 6 zugeführt. Dort werden die Stoffe wiederum stark verdünnt, um anschließend dem nächstkleineren Zyklon 20 zugeführt zu werden. Dort werden die nächstschwereren Partikel 21, wie vorzugsweise PVC, gewonnen. Der Oberlauf gelangt dann wieder mit dem Stoffstrom 9 zum Klassierer 10, um dort weiter entstofft zu werden oder bereits als Leichtstoff 22 ausgeschleust zu werden. Der Kreislauf kann jedoch auch nochmals durchfahren werden, wobei dann die in der Aufgabe 6 verdünnten Materialien dem kleinsten Zyklon 23 zugegeben werden. Dort können leichte Schwerstoffe 24, wie leichte Kunststoffe, Leder, Textilien, Gummi, Latex, Holz usw., abgetrennt werden, die vorzugsweise gepresst werden und als Ersatzbrennstoff dienen.

Mit dem Stoffstrom 9 gelangen dann die Leichtstoffe den Klassierer 10, wie insbesondere Polyolefine, die nach der im Klassierer 10 durchgeführten Behandlung gepresst und vorzugsweise werkstofflich weiterverarbeitet werden.

Die vom Klassierer 10 stammenden Faserstoffe 11 und die vom Kneter 13 stammenden Faserstoffe 25 werden zunächst einem kleinen Zyklon 26 zugeführt, in dem grobe Schwerpartikel 27, wie z. B. Sand oder Aluminium, abgetrennt werden. Der Überlauf gelangt in einen weiteren kleinen Zyklon 28, indem feinere Schwerstoffpartikel 29, wie feiner Sand oder auch Aluminiumschlamm, angereichert wird.

Der Überlauf 30 aus dem kleinen Zyklon 28 wird in einem Filter 31 weiterbehandelt, der zur Klassierung beispielsweise einen Schlitzsortierer aufweist. Dort die feinere Fraktion als Freifaserstoff 33 ausgeschleust. Der Teilstrom 34 der Leichtstoffe auf dem Sieb wird der Aufgabe 6 zugeführt. Das mit dem Freifaserstoff 33 ausgeschleuste Wasser wird im Entwässerer 35 vom Freifaserstoff getrennt und als Verdünnungswasser mit dem Teilstrom 34 der Aufgabe 6 zugeführt, um insgesamt die Effizienz zu steigern.

Der in Figur 2 gezeigte Kneter ist eine Vergrößerung des in Figur 1 gezeigten Kneters 13. Die hinzugegebenen Stoffe 40 wandern zentral im Knetergefäß 41 nach unten zu einem Rührer 42 mit konischer Spitze 43 und nur radial außen angebrachten Rührflügeln 44, 45. An der konischen Spitze 43 wird der Stoffstrom nach radial außen abgelenkt und mit den Rührflügeln 44 und 45 umgewälzt. Dadurch entsteht mittig ein Stoffstrom 46, der nach unten gerichtet ist. Der Kneter wird erst so betrieben, dass die Rührflügel nur gerade bedeckt sind, um einen effektiven Knetvorgang zu erreichen. Danach kann der Kneter so weit befüllt werden, dass radial außen ein Stoffstrom 47 Material von unten nach oben führt. Dort ist ein Überlauf 48 vorgesehen, über den das Material in eine umlaufende Rinne 49 gelangt, um über den Auslauf 50 das System zu verlassen.

Die nicht aufschwimmenden gröberen Materialien werden über die Schnecke 51 aus dem unteren Bereich des Behälters 41 entnommen.

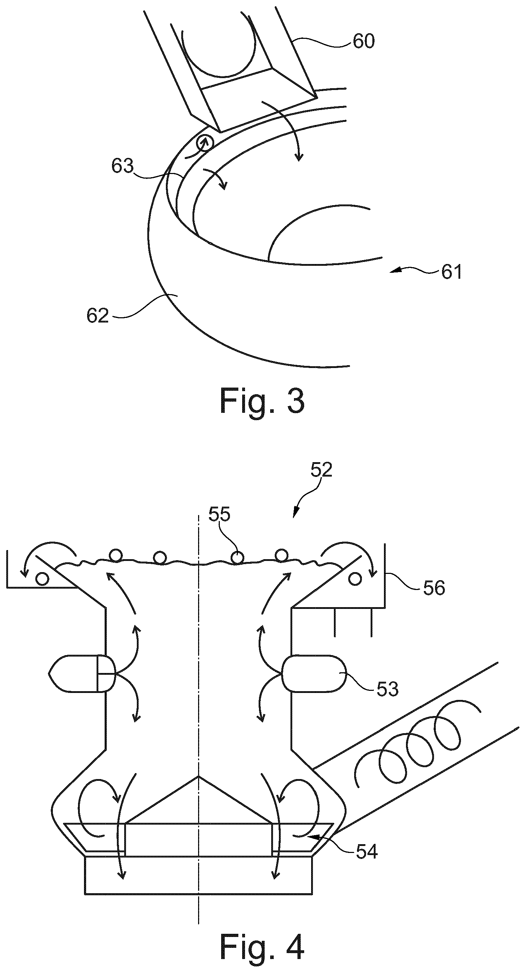

Die Figur 3 zeigt einen Ausschnitt aus dem Kneter, der einen Zulauf 60 zeigt, mit dem das Material dem mittleren Bereich des Kneters 61 zugeführt wird, während im Randbereich 62 ein als Rinne ausgebildeter Ringkanal 63 vorgesehen ist, über die aufschwimmende Materialien und überschüssige Flüssigkeit aufgefangen werden. Davon werden die aufschwimmenden Materialien getrennt und die Flüssigkeit als Stoffstrom weitergeführt.

Die Figur 4 zeigt einen Kneter 52, der im Wesentlichen wie der in den Figuren 1 und 2 gezeigte Kneter aufgebaut ist. Er hat jedoch einen mittleren Ringzulauf 53, von dem der schwerere zugeführte Stoff zum Rührer 54 absinkt, während die leichteren Partikel wie beispielsweise Styropor 55 aufschwimmen und über die umlaufende Rinne 56 abgeführt werden.

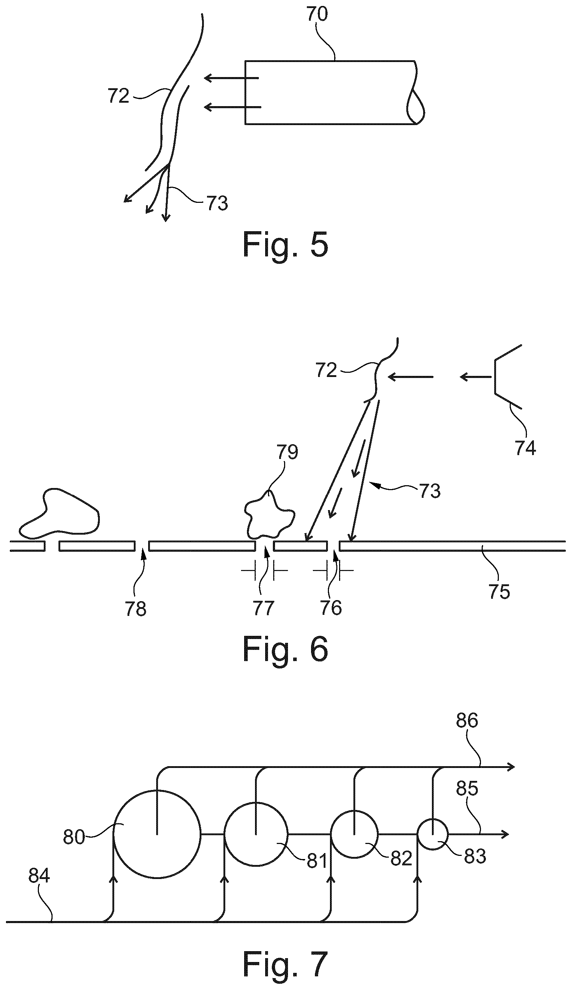

Die Figur 5 zeigt wie ein Materialstrom 70 beispielsweise in einem Trommelklassierer 71 aufgefächert werden kann. Dabei wird der Materialstrom 70 mit Druck an eine gebogene Platte 72 gespritzt, an der der Materialstrom abgelenkt und, wie bei 73 gezeigt, aufgefächert wird. Der Materialstrom im Zufluss kann dabei eine Geschwindigkeit von etwa 7 m/s aufweisen und mit einer Düse 74, vgl. Figur 6, kann die Geschwindigkeit des auf die Platte 72 auftreffenden Materialstroms noch deutlich gesteigert werden. Bei Auftreffen auf die Platte 72 werden Stippen geschert und es entsteht eine Zerfaserung an der Platte, die es erleichtert, im Trommelklassierer 71 die Fasern durch die Löcher im Lochblech als Feinstoffe 11 zu entfernen und gröbere Stoffe 12 dem Kneter 13 zuzuführen.

Die Figur 6 zeigt wie der aufgefächerte Materialstrom 73 auf ein Lochblech einer drehbaren Trommel 75 des Klassierers 10 auftrifft, wobei kleinere Fasern durch Löcher 76 mit 6 mm Durchmesser direkt beim Auftreffen des Strahls auf das Lochblech durch das Lochblech 75 hindurch gespült werden und gröbere Partikel daneben durch Löcher 77 und 78 mit 12 mm Durchmesser ausgetragen werden, wobei gröbere Partikel wie Stippen 79 mit einem größeren Durchmesser auf der Innenseite der drehbaren Trommel 75 bleiben.

Um im Klassierer 71 an den Lochblechen 75 zwischen den Löchern ein Verspinnen zu vermeiden, werden die Löcher in einem Abstand von mehr als 3 cm, vorzugsweise mehr als 4 cm und in der Regel von etwa 5 cm angeordnet. Dadurch wird vermieden, dass die Enden längerer Partikel in unterschiedliche Löcher geraten und sich dort stabil anreichern und nicht ausgewaschen werden können, was zu einem Verstopfen der Löcher führen würde.

Das zylindrische Lochblech der drehbaren Trommel 75 kann auch durch ein planes verschiebbares Lochblech beispielsweise die Oberseite eines umlaufenden Bands mit Löchern ersetzt werden.

Um eine effektive Trennung zu erzielen, kann es sinnvoll sein, mehrere Zyklone hintereinander zu schalten. Eine derartige Schaltung ist in Figur 7 gezeigt. Diese Anordnung ermöglicht es, parallel unterschiedlich große Zyklone 80 bis 83 mit einem Materialstrom über eine Zuführleitung 84 als Ausgangsmaterial zu beschicken und das abgetrennte Material als zwei Materialströme über zwei Abführleitungen 85 und 86 abzuführen. Dies erleichtert es, grobstückige, unzerkleinerte Spuckstoffe in unterschiedliche Fraktionen zu zerlegen.

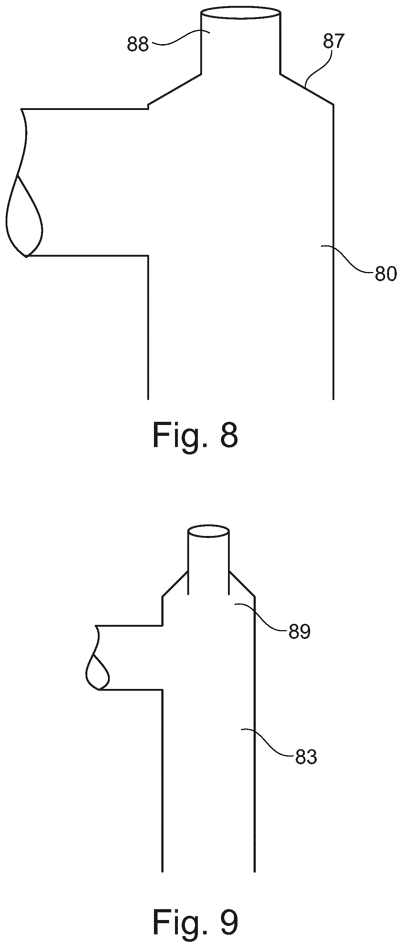

Die Figur 8 zeigt, dass im großen Zyklon 80 der obere Bereich als Dach 87 ausgebildet ist, um aufschwimmende Stoffe an einem konischen Deckel zum zentralen Auslass 88 zu führen. Der kleinere in Figur 9 gezeigte Zyklon 83 kann im oberen Bereich auch ein zentrales Tauchrohr 89 aufweisen, um die aufschwimmenden Stoffe abzuführen. Das Tauchrohr 89 verbessert die Trennschärfe und hat jedoch den Nachteil, dass bei großen Folien diese den Ausgang verstopfen können. Dieses Risiko wird durch den in Figur 8 gezeigten konischen Deckel des großen Zyklons minimiert.

Eine wesentliche Teilgruppe der in Figur 1 gezeigten Anlage wird vom Klassierer 10 mit den Zyklonen 7, 20, 22 gebildet. Ein weiterer Anlagenteil ist der Kneter 13, auf den je nach Prozessführung und Ausgangsmaterial auch verzichtet werden kann.

## Patentansprüche

1. Verfahren zur Nassaufbereitung von Material mit einer Mühle (13), die auch als Kneter ausgebildet sein kann, und einem nachgeschalteten Klassierer (10), ***dadurch gekennzeichnet, dass*** die Mühle ohne Trennorgan als reines Mahl- oder Knetorgan ausgebildet ist und der Klassierer (10) außerhalb der Mühle (13) angeordnet ist.

2. Verfahren nach Anspruch *1, **dadurch gekennzeichnet, dass*** der Klassierer (10, 71) eine Siebtrommel aufweist.

3. Verfahren nach Anspruch 1 oder 2, ***dadurch gekennzeichnet, dass*** der Klassierer (10) ein Endlosband wie insbesondere einen Riemen oder ein Gliederband aufweist.

4. Verfahren nach einem der vorhergehenden Ansprüche, ***dadurch gekennzeichnet, dass*** der Klassierer (10, 71) eine Fächerdüse (72, 73) aufweist.

5. Verfahren nach einem der vorhergehenden Ansprüche, ***dadurch gekennzeichnet, dass*** der Kreislauf aus Mühle (13) und Klassierer (10) mehrmals durchlaufen wird.

6. Verfahren nach einem der vorhergehenden Ansprüche, ***dadurch gekennzeichnet, dass*** das Material zuerst einen Zyklon (7, 20, 23) und dann einen Klassierer (10) durchläuft.

7. Siebtrommel (71) für ein Verfahren nach einem der vorhergehenden Ansprüche mit einer drehbaren Trommel (75), einem Prallblech (72) im inneren Bereich der Trommel (75) und einem Materialzulauf (70) in einem radial inneren Bereich der Trommel, der auf das Prallblech (72) ausgerichtet ist, ***dadurch gekennzeichnet, dass*** das Prallblech (72) einen konkaven oder planen Bereich aufweist, auf den der Materialzulauf (70) ausgerichtet ist und konzentrisch dazu einen konvexen oder abgekanteten Bereich oder dass das Prallblech (72) einen konvexen Bereich aufweist, auf den der Materialzulauf ausgerichtet ist und konzentrisch dazu einen konkaven Bereich.

8. Siebtrommel nach Anspruch 7, ***dadurch gekennzeichnet, dass*** das Prallblech (72) wie ein Teller oder eine Schüssel ausgebildet ist.

9. Siebtrommel nach einem der vorhergehenden Vorrichtungsansprüchen, ***dadurch gekennzeichnet, dass*** das Prallblech (72) derart mit der Trommel (75) verbunden ist, dass es sich mit der Trommel (75) dreht.

10. Siebtrommel nach einem der vorhergehenden Vorrichtungsansprüchen, ***dadurch gekennzeichnet, dass*** der Materialzulauf (70) auf einen dezentralen Bereich des Prallblechs (72) ausgerichtet ist.

11. Siebtrommel nach einem der vorhergehenden Vorrichtungsansprüchen, ***dadurch gekennzeichnet, dass*** das Prallblech (72) eine mittlere Ebene aufweist und die Ausrichtung des Materialzulaufs (70) in einem stumpfen Winkel zur mittleren Ebene angeordnet ist, sodass die Strömungsrichtung des Materials an dem Prallblech (72) in einem stumpfen Winkel abgelenkt wird.

12. Siebtrommel nach einem der vorhergehenden Verfahrensansprüche, ***dadurch gekennzeichnet, dass*** sie mehrere Prallbleche (72) aufweist, auf die jeweils ein Materialzulauf (70) ausgerichtet ist.

13. Siebtrommel nach einem der vorhergehenden Verfahrensansprüche, ***dadurch gekennzeichnet, dass*** die Prallbleche (72) hintereinander angeordnet sind.

14. Verfahren zur Klassifizierung von Material mit einer drehbaren Trommel (75), einem Prallblech (72) im inneren Bereich der Trommel (75) und einem Materialzulauf (70) in einem radial inneren Bereich der Trommel, der auf das Prallblech (72) ausgerichtet ist, ***dadurch gekennzeichnet, dass*** das Material nass aufbereitet wird.
